# EUROPÄISCHE PATENTSCHRIFT

(11) **EP 0 588 924 B1**
(45) Veröffentlichungstag und Bekanntmachung des Hinweises auf die Patenterteilung: **06.03.1996**
(21) Anmeldenummer: 92913265.2
(22) Anmeldetag: 22.06.1992
(51) Int. Cl.: B65B 51/04, B25C 5/04, B25B 27/14, B65D 73/02

(54) **VERFAHREN UND VORRICHTUNG ZUM ANBRINGEN VON BIEGEKLAMMERN AN EINEM GEGENSTAND**
PROCESS AND DEVICE FOR APPLYING BENDING STAPLES TO OBJECTS
PROCEDE ET DISPOSITIF POUR LA FIXATION D'ATTACHES A PLIER SUR UN OBJET

(30) Priorität: 20.06.1991 DE 4120440
(43) Veröffentlichungstag der Anmeldung: 30.03.1994
(73) Patentinhaber: Tipper Tie technopack GmbH, D-21509 Glinde (DE)
(72) Erfinder: HAGEDORN, Ewald, D-2000 Hamburg 52 (DE); PLEWA, Manfred, D-2810 Verden (DE)
(74) Vertreter: Glawe, Delfs, Moll & Partner
(86) Internationale Anmeldenummer: EP9201404
(87) Internationale Veröffentlichungsnummer: WO9300265

(56) Entgegenhaltungen:
- US-A- 3 009 156
- US-A- 3 380 226
- US-A- 3 504 838
- US-A- 4 570 841

## Beschreibung

Es ist bekannt, Biegeklammern zum Verschließen von Verpackungshüllen, insbesondere zum Verschließen der Enden von Wursthüllen, einzeln U-förmig vorzufertigen, zu flexiblen Magazinbändern miteinander zu verbinden, in das Magazin einer Verschließmaschine einzubringen und in einer Verschließstation dieser Maschine durch einen Maschinenhub um den zu bindenden Gegenstand zu biegen (DE-A-24 10 332). Die U-förmige Gestalt umfaßt auch solche Klammern, bei denen die Schenkel mit dem sie verbindenden Steg einen stumpfen Winkel einnehmen (DE-A-32 44 979). - Es ist bekannt, derartige vorgefertigte, U-förmige Klammern mit einem Code zu versehen, der beispielsweise die Initialen des Verarbeiters angibt. Dieser Code kann, nachdem die Klammern angefertigt wurden, durch einen besonderen Prägevorgang auf dem Stegrücken aufgebracht werden. Dafür steht dann allerdings nur die Länge des Stegs zur Verfügung. - Man kann Klammern zum Verschließen von Wursthüllen auch von Endlosdraht bilden (US-A-3380226), was aber den Nachteil hat, daß die scharfen, geschnittenen Klammerenden die Wursthüllen verletzen können.

Bekannt ist es, auf Verschlußstreifen aus Papier oder Kunststoffmaterial, die zur Versteifung Drahteinlagen enthalten, einen Code aufzudrucken, beispielsweise das Abfüll- oder Ablaufdatum. Da diese Verschlußklammern nur geringe Verschließkräfte übertragen und daher eine Beschädigung des Verpackungsgegenstands durch abgeschnittene Enden nicht zu befürchten ist, ist es üblich, sie von endlosem Vorrat zu verarbeiten, wobei der Aufdruck auf das endlose Band in einer der Verschließmaschine vorgeschalteten oder darin integrierten Druckvorrichtung geschieht.

Bei Biegeklammern aus Drahtmaterial ist eine Codierung mit wechselnden, jeweils aktuellen Daten unbekannt. Zum einen fehlt dafür der Platz auf dem Klammersteg der U-förmig vorgeformten Klammern. Zum anderen kann die Prägung nur durch den Klammerhersteller erfolgen, wobei dieser für jeden Abfülltag, der auf den Klammern vermerkt werden soll, jeweils genau zu ordernde Mengen liefern müßte, die dann vom Benutzer auch genau an dem angegebenen Tag aufgebraucht werden müssen, anderenfalls sie unbrauchbar werden. Ein solche Verfahren ist daher nicht akzeptabel.

Der Erfindung liegt daher die Aufgabe zugrunde, ein Verfahren zu schaffen, das des gestattet, Biegeklammern aus Drahtmaterial auf einer Länge, die größer als die Steglänge sein kann, verbrauchsgerecht zu codieren.

Die erfindungsgemäße Lösung besteht in den Merkmalen der Ansprüche. Sie beruht auf zwei sehr unterschiedlichen Voraussetzungen. Die eine besteht darin, daß die Klammern nicht, wie bisher gewohnt, U-förmig vorgebogen, sondern in gestreckter Form angeliefert werden, so daß sie auf einer Länge, die größer als die Steglänge ist, mit einer Codeprägung versehen werden können. Die andere besteht in der Erkenntnis, daß die Codierung sehr unaufwendig durchgeführt werden kann, wenn sie an den Verschließvorgang gekoppelt ist. Der Maschinenhub, der das Biegen der Klammer um den zu bindenden Gegenstand bewirkt, kann gleichzeitig zur Codeprägung verwendet werden. Derselbe Maschinenhub kann außerdem zur U-förmigen Vorformung der Klammern benutzt werden.

Dabei ergibt sich der zusätzliche Vorteil, daß die gestreckt vorfabrizierten und magazinierten Stäbchen ein wesentlich geringeren Raumbedarf als die bislang U-förmig vorfabrizierten und magazinierten Klammern haben und daher wesentlich bequemer zu handhaben sind. Die Magazine enthalten eine größere Anzahl von Stäbchen und brauchen daher an den Verschließmaschinen nicht so häufig gewechselt zu werden.

Zwar ist es bei Nagel- und Heftmaschinen, die mit U-förmigen Klammern arbeiten, bekannt, diese in gestreckter Form vorzufertigen und zu magazinieren und erst in der Heft- bzw. Nagelvorrichtung U-förmig zu biegen (US-A-3 009 156, 3 504 838 und 4 570 841); jedoch kommt Codierung bei Nagel- und Heftklammern ohnehin nicht in Frage, weil sie zu dünn sind. Auch war es nicht naheliegend, die gestreckte Vorfertigung und Magazinierung von Biegeklammern, die um einen Gegenstand zu biegen sind, in gestreckter Form vorzunehmen, weil es einfacher erschien, im Rahmen der Vorfertigung auch schon die U-förmige Vorformung vorzunehmen, statt sie dem Anwender zu überlassen, bei dem man maschinentechnische Erfahrung nicht voraussetzen kann und dessen Maschinen man deshalb so einfach wie möglich hält. Dank der erfindungsgemäßen Koppelung der Codierung an den Verschlußvorgang in einem und demselben Maschinenhub läßt sich die Maschine jedoch verhältnismäßig einfach und übersichtlich gestalten.

Die Vorfertigung der einzelnen Klammerstäbchen gestattet es, ihre Enden, ihren Querschnitt und/oder ihre Oberfläche in geeigneter Weise zu gestalten. Insbesondere kann man die Enden derart abrunden, daß die Gefahr einer Beschädigung der zu bindenden Gegenstände ausgeschaltet wird. Auch können sie mit Querorientierung versehen sein, beispielsweise mit einer Riffelung auf derjenigen Seite, die mit dem zu bindenden Gegenstand zusammenwirken soll, und einer für die Codierung freien Fläche auf der entgegengesetzten Seite. Mit dieser Querorientierung werden sie derart im Magazinstrang fixiert, daß die Querorientierung in der Verschließmaschine erhalten bleibt.

Ein wesentlicher Vorteil der Erfindung besteht auch darin, daß für unterschiedliche Klammertypen gleicher Gesamtlänge aber unterschiedlicher Schenkel- und Steglänge dieselben stäbchenförmigen Klammerrohlinge verwendet werden können. Ohne die Anwendungsvielfalt zu beeinträchtigen, wird auf diese Weise die Zahl der dafür vorzuhaltenden Typen von Klammerrohlingen vermindert.

Der Ausdruck Stäbchen soll besagen, daß sie im wesentlichen gerade sind. Eine einschränkende Aussage über die Querschnittsgestalt wird damit nicht getroffen. Sie können beispielsweise runde, ovale, trapezförmige oder flach-bandförmige Querschnittsgestalt haben. Dasselbe gilt für den Ausdruck Drahtmaterial.

Unter dem Maschinenhub ist der gesamte Bewegungszyklus des Antriebs zu verstehen, der zum Zwecke des Verschließens einer Klammer stattfindet. Innerhalb dieses Zyklus findet nach der Erfindung auch das Codieren und Biegen der Klammern statt, wobei es nicht unbedingt darauf ankommt, daß dies gleichzeitig mit dem Verschließvorgang oder bei der den Verschließvorgang bewirkenden Bewegungsrichtung des Hubs stattfindet. Jedoch ist dies vorteilhaft.

Der Magazinstrang von aufgereihten Biegeklammern, die einer Verschließvorrichtung zur Durchführung des obigen Verfahrens zuzuführen sind, zeichnet sich dadurch aus, daß die Klammern die Form gestreckter Stäbchen aufweisen, die parallel zueinander aufgereiht sind, wobei sie eine Querorientierung aufweisen und orientierungsgleich aufgereiht sind. Sie sind vorzugsweise durch ein längs verlaufendes Trägerband miteinander verklebt, wobei dieses auch in Mehrzahl vorhanden sein kann.

Die Magazinstränge können mit einem Magazinträger derart verbunden sein, daß sie mit diesem gelagert, eingesetzt oder gewechselt werden können, ohne daß die den Magazinvorrat bildenden Stränge oder Strangteile dabei auseinanderfallen. Bei diesem Magazinträger kann es sich um Behälter (beispielsweise Hülsen, Trommeln oder Kassetten) handeln, die die Magazinstränge in mehr oder weniger geschlossener Form aufnehmen, so daß ihre einzelnen Lagen beim Einsetzen oder Wechseln nicht auseinanderfallen können. Es kann sich auch um Wickeldorne oder dergleichen handeln, auf denen der aufgewickelte Magazinstrang gehalten ist. Bei Verschließmaschinen, die als sogenannte Doppelclipper ausgebildet sind, bei denen daher zwei Magazinstränge von entgegengesetzten Seiten her einlaufen, ergibt sich daraus eine vorteilhaft symmetrische Anordnung der Magazine.

Die Vorrichtung zum Biegen der Biegeklammern um einen Gegenstand zeichnet sich nach der Erfindung dadurch aus, daß sie im Zuführungsweg der Biegeklammern vor der Verschließstation eine Codierstation sowie ggf. eine Biegestation umfaßt, in welcher die als gerade Stäbchen vorgefertigten Klammern U-förmig gebogen werden. Die in der Codier- bzw. Biegestation vorgesehenen Werkzeuge sind mit demselben Antrieb wie die Werkzeuge der Verschließstation verbunden, und zwar in solcher Weise, daß sie durch eine gemeinsame Hubbewegung angetrieben sind.

Als Biegewerkzeug wird zweckmäßigerweise ein Paar von Schwenkbacken vorgesehen, die die zu bewegenden Schenkel der Klammern in Schwenkbewegung mitnehmen. Dadurch wird eine geringere Relativbewegung zwischen den Klammerschenkeln und den Biegewerkzeugen erreicht als beispielsweise bei einem die Klammerschenkel im Vorbeigleiten mitnehmenden Biegewerkzeug. Dies gilt insbesondere dann, wenn der Drehpunkt der Schwenkbacken nahe dem Punkt liegt, an welchem die Schenkel der Klammer in den Steg übergehen, weil dann die kleinstmögliche Relativbewegung zwischen Schwenkbacke und Klammerschenkel stattfindet. Hierdurch werden Abrieb und Verschleiß vermieden.

Die Schenkel sollen genau gleiche Länge aufweisen, da sich die Klammer sonst in den Verschließwerkzeugen verkantet. Auch dies gelingt mit Schwenkbacken leichter als mit einem an den zu biegenden Klammern entlanggleitenden Biegewerkzeug. Zum Zentrieren können die Schwenkbacken mit Endanschlägen versehen sein.

Die Codier- und Biegewerkzeuge werden zweckmäßigerweise von einem synchron mit dem Verschließstempel bewegten Schieber angetrieben, der mehr oder weniger starr mit dem Verschließstempel verbunden sein kann.

Das wichtigste Ergebnis der Erfindung besteht darin, daß die stäbchenförmigen Klammerrohlinge in der Verschließvorrichtung leichter mit einer geprägten oder gedruckten Codierung (z.B. einer Angabe des Verwendungsdatums) versehen werden können als fertig oder vorbereitend gebogene. Die in der Verschließvorrichtung vorgesehene Codiereinrichtung wirkt deshalb auf die noch im geraden Zustand befindlichen Klammerrohlinge ein, d.h. vor dem Biegevorgang oder bei diesem.

Die Erfindung wird im folgenden näher unter Bezugnahme auf die Zeichnung erläutert, die ein vorteilhaftes Ausführungsbeispiel veranschaulicht. Es zeigen:
- Fig. 1 und 2: eine Klammer im verwendungsbereiten, U-förmigen Zustand,
- Fig 3: einen Klammerrohling als Stäbchen,
- Fig. 4: einen aus vielen Stäbchen zusammengesetzten Magazinstrang,
- Fig. 5: schematisch die Gesamtanordnung einer erfindungsgemäßen Maschine,
- Fig. 6: eine teilweise geschnittene Seitenansicht des Maschinenbereichs, der die Biegestation und die Verschließstation umfaßt und
- Fig. 7: eine Ansicht der Biegestation, gesehen in Richtung der Klammerzuführung.

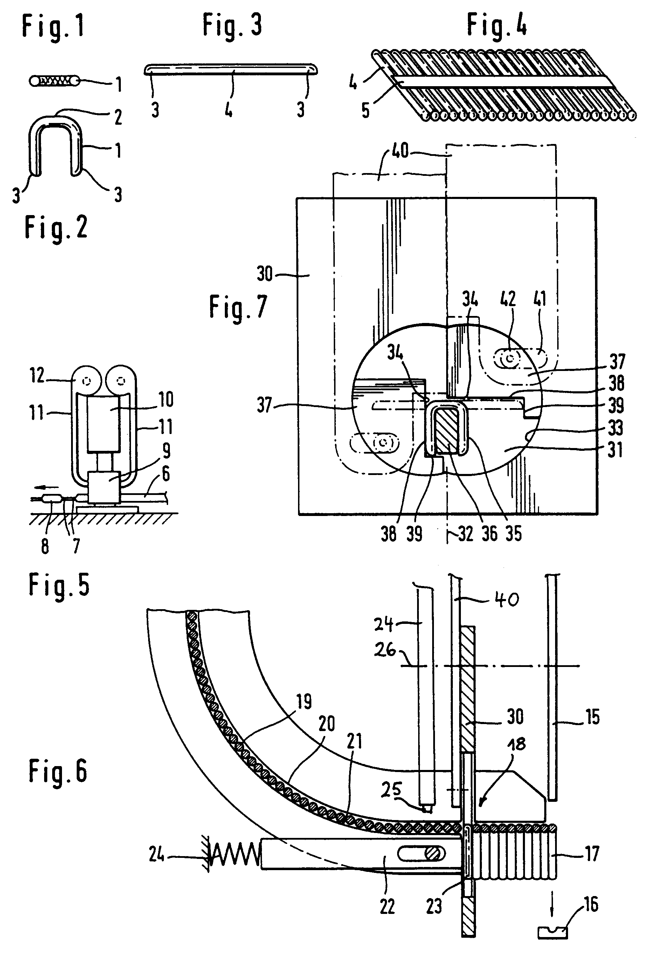

Die verwendungsbereiten Klammern gemäß Fig. 1 und 2 haben zueinander im wesentlichen parallele Schenkel 1, die durch einen rechtwinklig dazu verlaufenden Steg 2 miteinander verbunden sind. Die Schenkelenden 3 sind an der Außenseite stärker als an der einander zugewendeten Seite abgerundet. Außerdem können Steg und Schenkel an der Innenseite eine in Fig. 1 angedeutete Riffelung tragen. Diese Eigenschaften sind bei dem Stäbchen 4 gemäß Fig. 3 bereits vorbereitet. Das Stäbchen ist somit kein einfacher Rotationskörper; vielmehr weist es eine Querorientierung auf. In dem Magazinstrang gemäß Fig. 4 sind sämtliche Stäbchen 4 durch ein Band 5 in solcher Weise miteinander verbunden, daß sie alle die gleiche Querorientierung aufweisen, die so gewählt ist, daß diejenige Seite, die später die Innenseite der Klammer bilden soll, quer von der Strangrichtung wegweist, während die entgegengesetzt weisende Seite zur Aufnahme der Codierung frei ist.

Der theoretisch endlose Magazinstrang wird zweckmäßigerweise in nicht dargestellten, größeren Magazineinheiten zusammengefaßt, beispielsweise in Form von Rollen oder Paketen, die einige hundert oder tausend Stäbchen umfassen. Die Magazine der Verschließmaschinen brauchen daher nur vergleichsweise selten nachgefüllt zu werden.

Fig. 5 zeigt eine Maschine zur Anwendung der Erfindung in der Ausführung eines sogenannten Doppelclippers, der an einem Verpackungsstrang 6, beispielsweise einer Wurst, bei Schließhub jeweils zwei benachbarte Klammern 7 am Ende einer vorangehenden und am Anfang einer folgenden Verpackungseinheit 8 setzt. Er ist zu diesem Zweck mit einer Einheit 9 ausgerüstet, die zwei nebeneinander angeordnete Verschließstationen enthält und mit einer Antriebseinheit 10 verbunden ist. Den Verschließstationen werden die Klammern von zwei symmetrisch angeordneten Magazinstrangführungen 11 zugeführt. Die Erfindung ermöglicht es, diese mit jeweils einem Magazin 12 großen Fassungsvermögens zu ergänzen, wobei die Einheit 9 außer den Verschließstationen Biegestationen für die stäbchenförmig zugeführten Klammern und wenigstens auf einer Seite eine Codierstation enthält.

Fig. 6 zeigt die Codier-, Biege- und Verschließstation sowie die Magazinstrangführung einer Hälfte dieser Einheit 9. Die Verschließstation ist durch einen Verschließstempel 15 und eine Matrize 16 schematisch angegeben. Dazwischen befindet sich in schließbereiter Stellung die jeweils erste Klammer 17 des Magazinstrangs.

In Zuführungsrichtung vor der Verschließstation ist die Biegestation 18 angeordnet. Der Zuführungsabstand ist möglichst gering, um im Falle eines Klammerwechsels die Zahl der dazwischen befindlichen Klammern klein zu halten. Davor liegt die Codierstaton mit dem Stempel 24. Der Magazinstrang 19 der Stäbchen bzw. gebogenen Klammern wird zwischen geeigneten Führungsflächen 20, 21 zunächst der Codierstation, danach der Biegestation und schließlich der Verschließstation zugeführt. Der Vorschub erfolgt mittels eines Vorschubstempels 22, dessen Stirnfläche auf die Schenkel der jeweils zuletzt gebogenen, in der Zeichnung schwarz hervorgehobenen Klammern 23 in Förderrichtung drückt. Die Vorschubkraft wird durch eine Feder 24 aufgebracht, wobei mit irgendwelchen bewegten Teilen der Biegestation 18 ein Verdränger verbunden ist, der jeweils bei einem Biegevorgang oder kurz davor den Vorschubstempel 22 zurückdrückt, um Platz für die zu biegenden Schenkel zu schaffen. Nach Abschluß des Biegevorgangs weicht der Verdränger zurück, so daß der Vorschubstempel 22 sich wieder auf die zuletzt geformt Klammer aufsetzen kann.

Die Codierstation umfaßt einen Stempel 24, an deren Ende eine wechselbare Prägematritze 25 vorgesehen ist. Der Stempel ist in einer nicht dargestellten Führung in seiner Längsrichtung geführt. Er ist so angeordnet, daß beim Niedergehen des Stempels die Prägematritze 25 mittig auf die zur Aufnahme der Codierung vorgesehene Fläche eines der Stäbchen 21 trifft, das auf einer Unterseite in geeigneter Weise abgestützt ist, was der Einfachheit halber in der Zeichnung nicht näher dargestellt ist.

Anordnung und Funktion der Biegestation ergeben sich aus Fig. 7. In einer Lagerplatte 30, die in Fig. 6 im Schnitt erscheint, ist ein Ausschnitt 31 gebildet, dessen Umriß etwa die Form einer liegenden Ziffer "8". Die zu beiden Seiten der Mittellinie 32 symmetrischen Begrenzungskanten 33 sind kreisförmig. Ihre Mittelpunkte 34 befinden sich etwa da, wo bei der gebogenen Klammer 35 der Schnittpunkt zwischen Schenkel- und Stegrichtung liegt. Die Lage der Klammer wird festgelegt durch den Biegeamboß 36, der symmetrisch unterhalb der Punkte 34 angeordnet ist und von einer Fortsetzung der Führungsfläche 21 gebildet wird.

Innerhalb des Führungsausschnitts 31 befinden sich symmetrisch zwei Schwenkbacken 37 als Biegewerkzeuge, die an ihrer Außenkante durch die Leibungen 33 des Führungsausschnitts 31 in einer Schwenkbewegung geführt sind, deren Mittelpunkt von den Punkten 34 gebildet wird. Die in Fig. 7 rechts erscheinende Schwenkbacke ist in ihrer oberen Schwenk-Endstellung gezeigt und die linke in der unteren. Man erkennt, daß die Schwenkbacken 37 Seitenflächen 38 aufweisen, die mit der Außenseite der Klammerschenkel zusammenwirkt, um sie aus der strichpunktiert angedeuteten Stäbchenform in die mit durchgezogenen Linien gezeichnete Form der U-förmigen Klammer umzuformen. Durch diese Anordnung wird erreicht, daß die kleinstmögliche Relativbewegung zwischen den Schwenkbacken und Klammerschenkeln auftritt. Hierdurch werden Abrieb und Verschleiß vermieden.

Die Klammern sollen genau gleiche Schenkellänge haben. Damit dies gewährleistet ist, endet die Seitenfläche 38 jeder Schwenkbacke 37 in einem Endanschlag 39, der etwa rechtwinklig über die Seitenfläche 38 vorragt und jeweils mit einem Stäbchenende zusammenwirkt. Die Stäbchenlänge soll knapp der lichten Distanz zwischen den Endanschlägen 39 in deren Ausgangsstellung (rechts in Fig. 7) gleichen. Es ist unschädlich, wenn sie ein wenig kürzer ist, da der lichte Abstand zwischen den Endanschlägen sich in der ersten Phase von deren Schwenkbewegung verringert, während das Stäbchen noch nicht oder kaum gebogen wird, so daß sie sich an die Enden des Stäbchens anlegen können. Dabei wird dieses, wenn es zuvor unsymmetrisch gelegen hat, genau zentriert.

Um die Schwenkbacken 37 in ihrer Wirkebene zu halten, sind geeignete Führungseinrichtungen vorhanden, die der Einfachheit halber in der Zeichnung weggelassen sind.

Der Antrieb der Schwenkbacken 37 geschieht mittels eines Schiebers 40, dessen rechte Hälfte in der Zeichnung in der oberen und dessen linke Hälfte in der unteren Endstellung strichpunktiert dargestellt ist. Es versteht sich, daß beide Hälften ein einheitliches Teil bilden. Der Schieber 40 wirkt mit den Schwenkbacken 37 über Langloch 41 und Rolle 42 zusammen. Selbstverständlich wären auch andere Antriebsformen für die Schwenkbacken 37 denkbar; jedoch hat der Antrieb über einen auf- und abbeweglichen Schieber in dem gegebenen Zusammenhang der Vorteil, daß die Schieberbewegung der Bewegung des Verschließstempels 15 und des Codierstempels 24 gleicht, so daß alle drei zu gemeinsamem Antrieb miteinander verbunden werden können, was durch die strichpunktierte Linie 26 angedeutet ist. Vorzugsweise arbeiten sie synchron und mit gleicher Bewegungsstrecke, so daß sie sogar starr miteinander verbunden werden können. Dies dient der Einfachheit der Anordnung, die eine Voraussetzung dafür ist, daß die Umformung der Klammern beim Benutzer mit geringem Investitions- und Wartungsaufwand erfolgen kann. Jedoch ist dies nicht unbedingt erforderlich. Beispielsweise kann für den Prägestempel 24 eine kürzere Bewegungsstrecke vorgesehen sein.

## Patentansprüche

1. Verfahren zum Anbringen einer Bezeichnung an mit einer Biegeklammer aus Drahtmaterial zu verschließenden Gegenständen, bei dem einzeln in gestreckter Form vorgefertigte, magazinierte Drahtstäbchen einer Verschließvorrichtung zugeführt und jeweils unter Ausnutzung eines und desselben Maschinenhubs codiert und um einen Gegenstand gebogen werden.

2. Verfahren nach Anspruch 1, dadurch gekennzeichnet, daß die Codierung geprägt wird.

3. Verfahren nach Anspruch 1 oder 2, dadurch gekennzeichnet, daß die Stäbchen vor dem Biegen um den Gegenstand unter Ausnutzung desselben Maschinenhubs U-förmig vorgeformt werden und die Codierung als gesonderter Schritt vor dem U-förmigen Vorformen stattfindet.

4. Verfahren nach einem der Ansprüche 1 bis 3, dadurch gekennzeichnet, daß die Stäbchen mit übereinstimmender Querorientierung zur Magazinierung aufgereiht werden.

5. Verfahren nach Anspruch 4, dadurch gekennzeichnet, daß die Stäbchen eine leere Codierfläche aufweisen und aus einem Magazinstrang zugeführt werden, in dem sie parallel zueinander aufgereiht sind.

6. Vorrichtung zum Biegen von Biegeklammern aus Drahtmaterial um einen zu bindenen Gegenstand, dadurch gekennzeichnet, daß sie im Zuführungsweg der Biegeklammern vor einer Verschließstation, in der die Klammern um den Gegenstand gebogen werden, eine Codierstation sowie ggf. eine Biegestation (18) umfaßt und daß die in der Codierstation und in der Biegestation (18) vorgesehenen Werkzeuge (24, 37) mit demselben Antrieb (10) wie die Werkzeuge (15) der Verschließstation derart verbunden sind, daß sie durch eine gemeinsame Hubbewegung antreibbar sind.

7. Vorrichtung nach Anspruch 6, dadurch gekennzeichnet, daß als Biegewerkzeug ein paar von Schwenkbacken (37) vorgesehen ist, die die zu biegenden Schenkel (1) in Schwenkbewegung mitnehmen.

8. Vorrichtung nach Anspruch 7, dadurch gekennzeichnet, daß die Schwenkbacken (37) Endanschläge (39) zum Zentrieren der Stäbchen (4) aufweisen.

9. Vorrichtung nach Anspruch 7 oder 8, dadurch gekennzeichnet, daß der Schwenkpunkt (34) jeder Schwenkbacke (37) nahe dem angestrebten Übergangspunkt vom Steg (1) zum Schenkel (2) der Klammern (35) angeordnet ist.

10. Vorrichtung nach einem der Ansprüche 6 bis 9, dadurch gekennzeichnet, daß die Codierwerkzeuge (24) und die Biegewerkzeuge (37) von einem synchron mit dem Verschließstempel (15) bewegten Schieber (40) angetrieben sind.

11. Vorrichtung nach einem der Ansprüche 6 bis 10, dadurch gekennzeichnet, daß die Codierstation vor oder in der Biegestation angeordnet ist.

## Claims

1. A method of applying a designation to articles to be closed with a bending staple of wire material, in which small wire rods, which are loaded into magazines and which are prefabricated individually in straight form, are fed to a closing device and are each coded using a single machine stroke and are bent around an article.

2. A method according to Claim 1, characterized in that the coding is stamped.

3. A method according to Claim 1 or 2, characterized in that, before being bent around the article, the small rods are preformed to a U-shape using the same machine stroke and the coding takes place as a separate stage before the preforming into a U-shape.

4. A method according to any one of Claims 1 to 3, characterised in that the small rods are arranged in rows with corresponding transverse orientation for loading into magazines.

5. A method according to Claim 4, characterized in that the small rods have a blank coding surface and are fed from a magazine strip in which they are arranged in rows parallel to one another.

6. An apparatus for bending staples of wire material about an article to be bound, characterised in that in the feed path of the bending staples upstream of a closing station, in which the staples are bent around the articles, it comprises a coding station and, optionally, a bending station (18), and in that the tools (24, 37) provided in the coding station and in the bending station (18) are connected to the same drive (10) as the tools (15) of the closing station in such a way that they can be driven by a common lifting movement.

7. An apparatus according to Claim 6, characterised in that a pair of pivoting jaws (37) is provided as the bending tool, which drive the arms (1) to be bent in pivoting movement.

8. An apparatus according to Claim 7, characterised in that the pivoting jaws (37) have end stops (39) for centering the small rods (4)

9. An apparatus according to Claim 7 or 8, characterised in that the pivot point (34) of each pivoting jaw (37) is disposed near to the desired transition point from the web (1) into the arm (2) of the staples (35).

10. An apparatus according to any one of Claims 6 to 9, characterized in that the coding tools (24) and the bending tools (37) are driven by a slide member (40) moved in synchronism with the closing punch (15).

11. An apparatus according to any one of Claims 6 to 10, characterised in that the coding station is disposed before or in the bending station.

## Revendications

1. Procédé pour l'application d'un marquage sur des objets qui doivent être fermés avec une agrafe en fil métallique pliable, dans lequel des baguettes de fil metalliques, préfabriquées sous forme allongée et mises en magasin, sont introduites individuellement dans un dispositif de fermeture et sont à chaque fois codées et repliées autour d'un objet en utilisant une seule et même course de la machine.

2. Procédé selon la revendication 1, caractérisé en ce que le code est formé par estampage.

3. Procédé selon la revendication 1 ou 2, caractérisé en ce qu'avant d'être repliées autour de l'objet, les baguettes sont préformées en U en utilisant la même course de la machine et le codage est effectué en tant qu'étape séparée avant le préformage en U.

4. Procédé selon l'une quelconque des revendications 1 à 3, caractérisé en ce que les baguettes sont rangées avec une orientation transversale concordante pour être mises en magasin.

5. Procédé selon la revendication 4, caractérisé en ce que les baguettes présentent une surface libre de codage et sont introduites à partir d'une bande d'approvisionnement dans laquelle elles sont rangées parallèlement les unes aux autres.

6. Dispositif pour replier des agrafes pliables en fil métallique autour d'un objet à lier, caractérisé en ce qu'il comprend, dans le trajet d'alimentation en agrafes pliables, avant un poste de fermeture dans lequel les agrafes sont repliées autour de l'objet, un poste de codage et éventuellement un poste de pliage (18), et en ce que les outils (24, 37), prévus dans le poste de codage et dans le poste de pliage (18) sont reliés au même mécanisme d'entraînement (10) que les outils (15) du poste de fermeture, de telle sorte qu'ils puissent être entrai nés par un mouvement commun de la course de la machine.

7. Dispositif selon la revendication 6, caractérisé en ce qu'il est prévu, comme outil de pliage, une paire de mâchoires pivotantes (37) qui entraînent les branches à plier (1) dans leur mouvement pivotant.

8. Dispositif selon la revendication 7, caractérisé en ce que les mâchoires pivotantes (37) présentent des butées d'extrémité (39) pour le centrage des baguettes (4).

9. Dispositif selon la revendication 7 ou 8, caractérisé en ce que le point de pivotement (34) de chaque mâchoire pivotante (37) est situé à proximité du point de transition désiré entre la traverse (1) et la branche (2) des agrafes (35).

10. Dispositif selon l'une quelconque des revendications 6 à 9, caractérisé en ce que les outils de codage (24) et les outils de pliage (37) sont entraînés par un coulisseau (40) en mouvement synchrone avec le poinçon de fermeture (15)

11. Dispositif selon l'une quelconque des revendications 6 à 10, caractérisé en ce que le poste de codage est disposé avant ou dans le poste de pliage.
